# EUROPEAN PATENT APPLICATION

(11) **EP 4 473 824 A1**
(43) Date of publication of application: **11.12.2024**
(21) Application number: 22902576.2
(22) Date of filing: 24.11.2022
(51) Int. Cl.: A01G 17/00, A01G 24/00, A01G 31/00, A01G 22/00

(54) **METHOD FOR CULTIVATING FRUIT TREES WITH HIGH WATER CONSUMPTION IN PLANT POTS FOR INTENSIVE AND SUSTAINABLE FRUIT PRODUCTION**

(30) Priority: 10.12.2021 CL 20213304
(71) Applicant: Guiloff Salvador, Martín Abraham, Las Condes Santiago (CL)
(72) Inventor: Guiloff Salvador, Martín Abraham, Las Condes Santiago (CL)
(74) Representative: ABG Intellectual Property Law, S.L.
(86) International application number: PCT/CL2022/050120
(87) International publication number: WO 2023/102672

(57) **Abstract**

The present disclosure refers to a method of intensive and sustainable cultivation of fruit trees with high water consumption, such as avocado trees, in confinement via multivariable management of: plant architecture, nutrition, dynamic densities, artificial pollination, and use of specific wavelengths for each phenological state that allow early entry into production, maximization of yield per unit area, and control of the time of fruit harvest. The method of growing fruit trees with high water consumption (for example, avocado trees, citrus trees, apple trees, mango trees, pear trees, peach trees, kiwi trees, among others), in containers for intensive fruit production, includes the stages of: having plants avocado with high root density in aerated containers; arrange in containers in a substrate for accelerated root growth; fertigating the containers with a nutrient solution that provides precocity in the vegetative development, flowering and fruiting of the plant; arranging the containers in conditions of dynamic density, which varies from a density of 1.0 x 1.5 meters to a density of 3.5 x 2.5 meters; controlling the phenological cycle of the plant by lighting with a LED light system with flashing pulses of wavelengths that act cyclically over time and within the location space of the plants; artificially pollinating the flowers by applying pollen by a spray system to each floral panicle; controlling the size of the tree by driving and pruning to form a multi-axis type plant architecture; controlling pests and diseases through biological control with microorganisms; and cultivating the large-caliber fruit with a small seed size.

## Description

### TECHNICAL FIELD OF THE DISCLOSURE

The present disclosure focuses on the field of agronomy, water resources, and environmental impact. In general, it refers to a method of cultivation of fruit trees with high water consumption, which optimizes water use and maximizes production. In particular, it refers to a method of intensive and sustainable cultivation of trees with high water consumption (e.g. avocado trees, citrus trees, apple trees, mango trees, pear trees, peach trees, kiwi trees, among others) in confinement, via multivariable management of: plant architecture, nutrition, dynamic densities, artificial pollination and use of specific light wavelengths for each phenological stage that allow for early entry into production, maximization of yield per unit area, and control of the fruit harvest timing. More particularly, the present disclosure refers to 1. Method of cultivation of avocado trees in containers for intensive fruit production.

### BACKGROUND OF THE DISCLOSURE

It is estimated that agriculture uses 70% of the water withdrawn globally, with agricultural activities accounting for an even higher proportion of "consumptive water use" due to crop evapotranspiration. Globally, more than 330 million hectares of land are irrigated. Irrigated agriculture accounts for 20% of the total cultivated area and contributes 40% of total food production worldwide. Competition for water resources is expected to increase in the future, putting particular pressure on the agricultural sector. Due to population growth, urbanization, industrialization and climate change, improved water use efficiency needs to be accompanied by a 25% to 40% reallocation of water in water-stressed regions. (https://www.bancomundial.org/es/topic/water-in-agriculture).

The UN estimates that, by 2025, 1.8 billion people will live in countries or regions with absolute water scarcity. Against the backdrop of climate change, it is projected that, by 2030, almost half of the world's population will live in water-stressed areas. In this context, Chile is a country whose development is limited mainly by the droughts that have occurred in recent years and the scarcity of fresh water. Chile is among those suffering from water stress. Chile's forestry and livestock sector is clearly export-oriented, with fruit growth and forestry playing a predominant role. Thus, Chile still bases its economic growth on the exploitation of natural resources, and water is a fundamental element for its agricultural sector (https://www.elmostrador.cl/agenda-pais/2019/08/30/como-la-escasez-de-agua-estaria-afectando-la-agricultura-de-nuestro-pais/).

According to the World Resources Institute, more than 25% of the world's crops are grown in regions with severe water scarcity, with the five most water-intensive crops in the world being: 1) almonds from California in the United States, 2) avocados from Petorca in Chile, 3) sugar cane in Pakistan, 4) rice from Punjab in India, and 5) bananas in the Dominican Republic. (https://agriculturers.com/los-5-cultivos-que-masagua-consumen-en-el-mundo/).

Fruit crops can be divided according to their water needs, depending on whether they are resistant, tolerant, or sensitive to drought will depend on their water consumption. There are several drought-sensitive fruit trees that require mandatory irrigation: i) cherry, apricot, peach, pear, late apple, avocado, and cherimoya with 750 mm of water per year; ii) blackberry, citrus, and raspberry with between 800-1,300 mm of water per year; iii) papaya with 1,800 mm of water per year; iv) kiwifruit with 2,000 mm of water per year; and v) hazelnut with between 2,500-3,000 mm of water per year. (http://blog.agrologica.es/necesidades-hidricas-de-las-principales-especies-frutales-riego-tabla-resistentes-sequia/).

As indicated above, an emblematic example of water scarcity and avocado cultivation in Chile is the town of Petorca, an area that is unfortunately noted for having enormous amounts of hectares cultivated with avocado trees and not having sufficient water for human consumption. However, this water shortage cannot be attributed only to avocado plantations, because in the area there are also large green areas corresponding to citrus plantations. Thus, the water used for avocado development is not so much more than the cultivation of citrus or walnut trees, so beyond the species produced, the problem is the excessive amount of hectares planted.

However, beyond why a certain type of tree is of more commercial interest than others, and why some of them consume so much water, it is necessary to understand a little more about the life cycle and reproduction of these fruit trees with high water consumption, if we want to generate real strategies for resource optimization.

The typical example of these trees is the avocado, which can produce millions of flowers, but less than 1% of them bear fruit. This is due to a series of events that occur during the progamic phase (from the time pollen reaches the stigma until fertilization occurs) and early fruit development, ranging from inefficient pollination to adverse environmental conditions. Research on avocado trees has shown that the percentage of flowers with pollen tubes in the vicinity of the ovule is affected by the number of pollen grains reaching the stigma, although not all flowers whose ovules have been fertilized will eventually develop into fruit. On the other hand, after applying pollen manually, fruit set is increased. However, the percentage of flowers that transform into fruit is still very low, suggesting that inefficient pollination could be one of the factors involved in low fruit set, but not the only one. Additional factors may be involved in the reproductive success of the flower, such as the quality of the flower itself, which in turn depends on efficient nutrition. The progamic phase is very sensitive to environmental conditions, especially temperature, which plays an important role in conditioning stigmatic receptivity, pollen tube growth speed and ovule viability. On the other hand, for avocado trees, it has been described that the deposition of at least 20 pollen grains is necessary for fertilization to take place. Thus, it is important to point out that in order for the flowers, whose ovules have been fertilized, to be naturally transformed into fruit, many factors must concur, which is why the tree generates such a large number of flowers over a long period of time, with the consequent energetic effect that this involves.

Regarding avocado obtained as a fruit of avocado plantations, it should be noted the large increase in consumption in recent years, from an approximate production of 2.8 million tons in 2000 to approximately 7 million tons in 2019. In the case of Chile, avocado cultivation, in its different varieties, has become an important focus of agricultural and economic development. The country exports about 70% of its production and largely consumes the remainder domestically. Beyond the consumption of avocados in Chile, avocado production plays an important role in the national economy. Apart from satisfying a human food need, it generates an important number of direct and indirect jobs. The production of avocados, most of which are exported, puts this sector within a national objective-making Chile a food power in the international market.

Therefore, it is necessary to develop new cultivation methodologies and products that consolidate Chile in the international market and that, at the same time, fulfill a social objective by reducing the water consumption of these species and making a more sustainable agronomy. This requires understanding and manipulating all the variables that come into play when cultivating a fruit tree to obtain an optimal fruit production. Although the development of the methodology of the present disclosure is carried out based on the Chilean reality, its application can be carried out in any geographical site of the world where trees of high water consumption are cultivated, as is the case of the avocado tree.

Consequently, several innovations have emerged as solutions to reduce water consumption and improve the yield of fruit tree crops. Thus, different patents and publications are indicated in the state of the art, which are based on new innovations for agronomic purposes, for example, the utility model CN 203968874, refers to an experimental seedling cultivation device. The experimental seedling cultivation device includes a cultivation groove, where an opening is formed in the upper part of the cultivation groove, then, a concave space is formed inwards in the cultivation groove and an internal cavity for containing water or nutrient solutions is formed in the lower part of the cultivation slot, cross-linked grid plates are arranged in the inwardly concave space of the cultivation slot, the cultivation slot is divided by the grid plates into a plurality of containment slots, where through holes are formed communicating respectively with the inner cavity in the lower part of the containment slots, respectively. Seedling culture boxes for containing nutrition matrices are contained in the containment slots, water inlet holes are formed in the lower part of the seedling culture boxes, and water suction cotton rods are arranged in the seedling. The position of the cultivation slot opening is covered with a covering film. By means of the experimental seedling cultivation device, the conditions of water requirements and the degree of illumination of seedling growth of different plants can be conveniently judged.

The utility model CN 205993179 discloses a multifunctional pot characterized in that it includes: a pot body, a hook, a base plate, a universal wheel, a water receiving disc, and a suction cup. The pot body and the universal wheel are individually attached to the face of the upper and lower ends of the base plate, the hook is fixedly attached to the pot body, the drip tray is attached to the base plate by the suction cup, and the drip tray is located in the lower section of the hook. The pot body disclosed includes an inner trough, an outer trough, and a soil loosening plate. The pot body and the inner trough are placed in the outer trough body, and a free-flowing space is formed between the two. The soil loosening plate is attached to the side wall of the outer trough.

US Patent No. 2,492,152 discloses plant pot assemblies and has among its objects the provision of such assemblies that will provide adequate protection against dehydrating and waterlogging of plants. Such a plant pot assembly prevents undesirable conditions and provides a moist atmosphere surrounding the pot. A plant pot assembly is provided including a container with an open top having an unperforated wall and a planter having a porous wall and a flange near the top thereof, the planter being supported within the container with its wall spaced from the wall of the container and such that the bottom of the pot is placed a substantial distance above the bottom of the container, space being reserved within the container below the bottom of said pot for the accumulation of water. By this placement of the pot, waterlogging is prevented, since the bottom of the pot does not come in contact with the water at the bottom of the container. In addition to this feature, a removable seal is provided between the top of the pot and the container which has the effect of causing constant maintenance of moist atmospheric conditions around the pot, thus preventing drying of the soil in the pot.

US Patent Publication No. 2017/027118, discloses an avocado seed planter, which is a reusable device that holds an avocado seed while it produces roots in a jar or beaker of water. Once the seed has rooted, it is removed from the pot and can be planted in a pot with soil to grow as a houseplant or can be planted to grow outdoors if desired.

EPO Patent No. 2103212 discloses a plant growth regulator and a technique for its use. To be specific, this disclosure relates to a plant growth regulator capable of increasing the harvest rate by use of glutathione and to a technique for use of the plant growth regulator.

PCT Publication No. WO 2013/044208, indicates methods for improving plant growth, including treating a plant seed or a plant germinating from seed with an effective amount of at least one chitooligosaccharide, wherein upon harvesting the plant exhibits an increased plant yield measured in terms of bushel/acre, increased root number, increased root length, increased root mass, increased root volume, and increased leaf area, as compared to untreated plants or plants harvested from untreated seed.

Korean Patent Publication No. 20200102232 indicates an aerated pot based on a microporous technique. The pot based on the microporous technique overcomes the existing problems of air flowing poorly through a space to accommodate plants and the space not retaining moisture such that growth is hindered, by having greater air permeability compared to other flow-through pots and retaining moisture in micropores to aid plant growth.

Chinese Patent Publication No. 105766644 relates to the methods of tissue culture for *Abelmoschus esculentus* and belongs to the technical field of plant biology. The method comprises the following steps: preparing an explant, selecting mature and whole *Abelmoschus esculentus* seeds, washing *Abelmoschus esculentus* seeds with tap water for 2-3 hours, then disinfecting *Abelmoschus esculentus* seeds with 70 percent alcohol on a clean bench for 30 seconds, disinfecting with 0.1% mercuric chloride for 8-10 minutes, rinsing with sterile water 5-6 times, and soaking the disinfected seeds in sterile water for 12-24 hours; inoculating the soaked seeds in a 1/2 MS culture medium and growing the seeds under lights of a fluorescent lamp for 5-7 days; after flattening the leaves, cutting 1.5-25 cm terminal shoots with partial hypocotyls, inoculating the terminal shoots in MS culture medium containing 0.05 mg/L NAA, and growing under LEDs (light emitting diode) in a blue-red-yellow combination ratio of 1 to 3 to 1 for 35 days, in which LED lights in a blue-red-yellow combination ratio of 1 to 3 to 1 is suitable for the growth of *Abelmoschus esculentus* tissue culture seedlings.

Patent application KR 20170123079 indicates a method for increasing the bioactive substances and growth of *Crepidiastrum denticulatum* using various LEDs. By ensuring an optimized LED technology for increasing the bioactive substances and growth of *Crepidiastrum denticulatum,* which is a medicinal crop used as a raw material for pharmaceuticals, the method of this disclosure can be applied as a technology for producing highly functional plant raw materials.

As can be appreciated, there are several descriptions that allow identifying the different variables that can be managed or manipulated for an intensive and sustainable cultivation of trees with high water consumption (such as avocado trees). However, the cultivation of these trees remains a problem since it has not been possible to nobody has generated a methodology that replaces the massive cultivation on land, which requires high water consumption, or that is transversal for different species of fruit trees, with high water consumption.

Therefore, there is still a need for better cultivation methods for these types of trees, where water use efficiency (WUE) can be improved. In addition, there is a need for crops that improve their impact on the environment and sustainability, reducing the use of agrochemicals (nutrition or phytosanitary), without affecting or reducing the fruit production of the tree, since if the tree does not produce a yield similar to that of a tree on land, it will not be profitable for growers, thus, the method, in addition to improving WUE and environmental sustainability, must also be commercially attractive in terms of fruit production yield.

### SUMMARY OF THE DISCLOSURE

The objective of the present disclosure is to provide a methodology regarding the basic guidelines to be handled for the cultivation of high water consumption fruit trees in aerated containers with efficient and uniform root architecture, analyzing and improving the WUE, environmental sustainability, artificial pollination, the use of aerated containers, the distance of location and photoperiod, and light intensity of leaf exposure. The condition that the trees are arranged in aerated containers improves the WUE, since the necessary water is concentrated in the container. On the other hand, when the trees are in containers, there is sustainability in the use of nutrients, since: i) the best nutrients are captured efficiently by the trees, and ii) the nutrients remain concentrated in the containers, so there is no direct impact on the surrounding environment, as is the case when the trees are planted directly in the ground. All the above variables operate jointly and synergistically in order to achieve early vegetative development, flowering and fruiting, and phenological control of the plant, synchronizing flowering in a concentrated manner and in optimal environmental conditions for fruit development.

Consequently, the present disclosure shows notable technical advantages with respect to the cultivation technology known in the state of the art, these advantages are achieved based on an intensive and sustainable cultivation method of fruit trees with high water consumption, which are in confinement and through multivariable management, among which stand out: plant architecture, nutrition, dynamic densities, artificial pollination, and use of specific wavelengths for each phenological state that allow precocity in the entry into production, maximizing yield per unit area and controlling the time of fruit harvest. The method of growing fruit trees, such as avocado trees in containers for intensive fruit production (although it can also be applicable to citrus trees, apple trees, mangoes, pear trees, peaches, kiwi, among others), includes the stages of: arranging from clonal plants with high root density in aerated containers; arranging a substrate in the containers for accelerated root growth; fertigating the containers with a nutrient solution that provides precocious vegetative development, flowering, and fruiting of the plant; arranging the containers in conditions of dynamic density, which varies from a density of 1.0 x 1.5 meters to a density of 3.5 x 2.5 meters; controlling the phenological cycle of the plant by lighting it with a LED light system with flashing pulses of wavelengths that act cyclically over time and within the space the plants are located; pollinating the flowers artificially by applying pollen by a spray system to each floral panicle; controlling the size of the tree by training and pruning it to form a multi-axis type plant architecture; controlling pests and diseases through biological control with microorganisms; and cultivating the large-caliber fruit with a small seed size.

### BRIEF DESCRIPTION OF THE FIGURES

A detailed description of the disclosure will be made in conjunction with the figures that are part of this application.

It is important to indicate that the figures only act as support elements for a better understanding of the disclosure, without them representing all the components to a real or proportional scale. The disclosure cannot be limited only to what appears in the figures, since they represent, in a pedagogical way, the transcendental elements of understanding the basic aspects of the cultivation method, and the figures may not include elements that are of general knowledge in the state of the art. Thus, the following figures are shown:
Figure 1: Schematic of a multi-axis plant. It shows the layout of a multi-axis plant, including a main axis (A), from which 2 or more secondary branches (B) emerge.
Figure 2: Diagram of a clonal root system. This system has a main stem from which the main adventitious roots emerge and on which second and third order roots are generated.

### DETAILED DESCRIPTION OF THE DISCLOSURE

For a better understanding of the present disclosure, it is necessary to provide the following definitions, which should only be understood as elements that help the understanding of the particular technical characteristics in this technical field.

As used in the present disclosure, the term *"high root density clonal plants"* refers to a plant that has a much more efficient root system, with a large number of absorbing roots capable of constantly supplying the water and nutrients required by the various structures of the plant. The fact that the plants are clonally propagated, gives them the advantage of uniformity and tolerance to conditions of pathogen development that may occur in this confinement.

As used in the present disclosure, the term *"aerated containers",* corresponds to all types of planters, pots and other types of containers, which limits water retention and on the other hand isolates the plant from the soil to keep it in an aerated substrate environment.

As used in the present disclosure, the term *"fertigating"* relates to a technique that rations the use of water, allowing placement of the fertilizers in solution near the root system of the plant, with which, there is a faster and more direct contact of the nutritive elements with the roots and, therefore, there is a better absorption and use of the fertilizers. Also, considering the development stages of the crop, fertilization can be fractioned, reducing or increasing the amounts of fertilizers, according to the needs of the crop in order to reduce environmental pollution and production costs. Fertigating makes the use of water and nutrients more efficient, since they are supplied at the same time and in a localized manner. Among the most notable advantages are fertilizer savings, fractional supply of nutrients and greater efficiency in the use of water.

As used in the present disclosure, the term *"vegetative development"* refers to the life cycle of plants in which neither flowers nor fruits are produced, but only twigs and leaves.

As used in the present disclosure, the term *"flowering"* refers to the beginning of the reproductive phase of the plant, the success of which is determined by the moment in which it occurs, which must be the most appropriate within its development and under optimal environmental conditions. It consists of the process of growth and separation of the sepals and petals of the flower that leaves the stigmas and stamens exposed, also identified as anthesis. With this, the flowers open to allow pollination, fertilization, the appearance of the seeds and finally the formation of the fruit.

As used in the present disclosure, the term *"fruiting"* is the process of flower set produces a fruit.

As used in the present disclosure, the term *"dynamic density"* corresponds to the distance between trees, which varies over time to maximize space utilization. Density refers to the number of trees per hectare, meaning that after the initial high density distribution, the plants are spaced and distributed in lower densities to allow for optimum light and maximum productive surface area.

As used in the present disclosure, the term *"phenology"* is the science that studies the development, differentiation and initiation of organs or structures and refers to the study of biological phenomena linked to certain periodic rhythms such as budding, flowering, among others, and relating them to the environment in which they occur (Hodges, 1991; Mullins et al., 1992). In this case, the *"phenological cycle"* of plants has to do with the relationship between climatic factors and plant cycles. Specifically to the periodic production of vegetative and reproductive structures.

As used in the present disclosure, the term *"floral panicle,"* also known as panicle, is a racemose inflorescence composed of clusters that decrease in size towards the apex. In other words, a branched cluster of flowers, in which the branches are themselves clusters. It is cataloged as a cluster of clusters and has a main rachis that is subdivided into secondary rachis from which flowers with pedicel are detached.

As used in the present disclosure, the term *"multi-axis,"* also known as a bushy system, is a type of tree branch training that is fixed only once at the beginning in order to maximize the productive surface of the tree for an optimum leaf volume required for the desired production level. The vigorous shoots that emerge are selected by choosing 4-5 suitably distributed which will form the bush or foliage.

As used in the present disclosure, the term *"clonal propagation"* consists of rooting an etiolated stem from a variety of desired rootstock by scraping it and applying a hormone solution (Frolich and Plath Method. 1972).

As used in the present disclosure, the term *"root architecture"* refers to the structure of plant roots and how they develop from adventitious roots emerging from a stem. The conformation of the root system is an essential adaptive aspect in plants, as it allows the uptake of water and nutrients at different levels of the soil profile. In forest species, root architecture is also relevant for container plant culture and other management aspects.

As used in the present disclosure, the term *"adventitious roots"* refers to those roots that do not originate from the radicle of the embryo, but originate elsewhere in the plant, such as in some portion of the stem, in underground stems, and in old roots.

As used in the present disclosure, the term *"mulch"* is any material, usually organic, which is placed on the ground around plants and which acts as a protective layer from climatic changes taking place in the soil, mainly humidity and temperature. *Mulch* is beneficial for periods of water deficiency, since it has the ability to reduce evaporation, retains more humidity and improves the maintenance of nutrients, allowing the soil structure to be maintained.

Therefore, and as indicated in previous paragraphs, there are different types of methods of cultivating of fruit trees of commercial interest in pots for intensive and sustainable production of fruit (such as avocado trees, citrus trees, apple trees, mango trees, pear trees, peach trees, kiwi trees, among others), but no document discloses, on equal terms, the method of cultivation disclosed in the present disclosure.

Consequently, one of the advantages of the disclosure is that it addresses the problem of the WUE and environmental sustainability, since it discloses a cultivation method that needs less water to produce a fruit tree, particularly avocado trees, which present the same fruit yield indexes as those cultivated under normal soil conditions but under conditions that ensure a lower water consumption per tree, and additionally allowing a higher densification, thus achieving a greater use of the productive surface. That is to say, by means of the cultivation methodology of the present disclosure, in a limited surface, it is possible to obtain a fruit (avocado) of high caliber and a high volume of harvest in comparison with a traditional cultivation system, but, with a reduced water consumption and without environmentally affecting its surroundings.

In addition, through the present disclosure, a cultivation methodology has been developed in aerated containers, with clonal plants of high root density and led light, which represents an advantage in terms of high efficiency in the use of resources, plant, water, nutrition, and light, and the low use of agrochemicals harmful to the environment, the method gives the advantage of obtaining a fruit production with a low environmental impact and high nutritional value.

Another advantage of the method of the present disclosure is that artificial pollination is developed, which is very useful, since the pollen arrives at the right time, resulting in a higher pollination rate. On the other hand, natural pollination through bees has become more complex, as these have been reduced in number by the indiscriminate use of pesticides and diseases, so having an alternative method of pollination is a breakthrough in the cultivation of fruit trees with high water consumption, allowing more sustainable pollination. Thus, the low environmental impact of the method of the invention and the scarce use of harmful agrochemical products is another advantage that contributes to the protection and care of bees and their repopulation.

Another noteworthy feature of the present disclosure is that in the state of the art some of the elements used in the claimed methodology have been disclosed separately, but none of the cited documents describes a method with all the elements and stages included in the methodology of the present disclosure, by means of which water use is optimized and fruit production is maximized. All the characteristics that make up the cultivation methodology of the present disclosure are applied jointly and synergistically, achieving an early vegetative development, flowering and fruiting, and a phenological control of the plant, synchronizing flowering in a concentrated manner and in optimal environmental conditions for fruit development, which allows early entry into production, maximization of yield per unit area and control of the time of fruit harvest, all with reduced water consumption.

Additionally, and as will be described in the examples section, another advantage of the present methodology is that it was possible to determine the optimal relationship of crop distance between individuals to optimize fruit production, improving production spaces, where each individual has optimal access to air, light, and growing space resources.

Finally, the method of the present disclosure, together with the aerated containers and the plant material (avocado) used, presents the technical advantage of generating a mass of fine roots and a method of artificial fertilization that achieves an early vegetative development, flowering and fruiting, while the use of the LED light system, manages to control the phenological cycle of the plant, resulting in a better fruit production at a lower cost of resources.

Thus, the technical advantages of the present disclosure are achieved through the conjunction of stages and special features, where each one of them makes a technical contribution that is enhanced by the rest of the applied features.

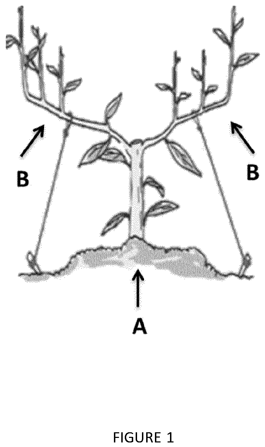

Thus, for example, in Figure 1, the multi-axis type plant architecture is represented, where the size of the tree is controlled by training and pruning to form a main axis (A), from which two or more secondary branches (B) are born, which in turn are divided into tertiary branches or axes where the fruit will grow and develop.

Therefore, the method of cultivation of fruit trees with high water consumption, particularly avocado trees, in containers for intensive fruit production, according to the present disclosure, comprises the stages of: (i) arranging high root density clonal plants in aerated containers; (ii) placing the containers on mobile structures (pallets), under outdoor conditions; (iii) arranging in the containers a substrate for optimal fine root growth; iv) fertigating the containers with a nutrient solution that provides early vegetative development, flowering, and fruiting of the plant and fruit development; v) arranging the containers in conditions of dynamic density which vary from an initial distance between plants of 1.0 x 1.5 meters to a maximum distance of 3.5 x 2.5 meters; vi) controlling the phenological cycle of the plant by means of lighting with a LED light system with flashing pulses of wavelengths that act cyclically over time and within the space where the plants are located; vii) artificially pollinating the flowers by applying pollen through a sprinkling system to each flower panicle; viii) controlling the size of the tree by training and pruning it to form a multi-axis plant architecture; ix) controlling pests and diseases by biological control with microorganisms; and x) growing large fruit with a small seed size.

It is relevant to emphasize that the cultivation method of the present disclosure is carried out in a continuous cycle that starts from the disposition of the plant in an aerated container and ends with the harvesting of the fruits, therefore, given the particular conditions of each plant or tree, the duration of said continuous cycle may have a variation of time for each tree, although time ranges are always established for the realization of the whole cycle covered by the methodology.

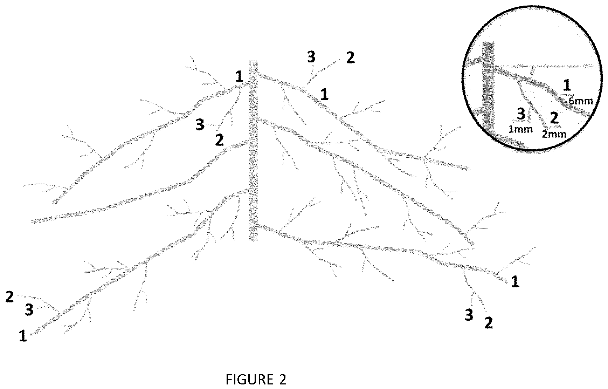

The clonal plants, originally found in nurseries when they are approximately 80 centimeters tall, are transplanted to aerated containers, where they are propagated clonally with a root architecture comprising five adventitious roots, where the adventitious roots are distributed in a spiral form, generating a mass of fine roots that develop in a cyclical manner. The aerated containers contain a mixture of inert substrate, which may consist of, for example, coconut fiber and peat, allowing for plenty of aeration of the roots. With this method of clonal propagation, a crown of roots is obtained, which arise from a main stem, from where main roots emerge with open angles that generate a superficial root system (50 cm maximum depth), with a large number of second and third order roots (absorbing roots). As shown in Figure 2, the roots are composed of a main root (1) which has a diameter of approximately 6 mm, from which emerge the second order roots (2) which have a diameter of approximately 2 mm, and from these arise the third order roots (3) which have a diameter of approximately 1 mm.

The plants of the present disclosure are always kept in containers, the cultivation in an isolated container allows advantages in terms of sustainability (less water consumption, greater efficiency in the use of nutrients, fertilizers and agrochemicals, as well as better control over phenological aspects), therefore, the plants will always be in pots or containers on the surface of the determined land.

On the other hand, the method includes the fertigating of the containers with a nutrient solution, which is carried out at a specific frequency and quantity for each growth stage, frequency that is evaluated according to the characteristics that are developed and monitored day by day, for which, a nutrient solution is added, mainly comprising phosphoric acid, ammonium nitrate, potassium nitrate, calcium nitrate and magnesium sulfate in quantities that are adjusted according to the needs of each plant.

As for the crop densities of the method, after the initial high density distribution, the plants are distributed in dynamic densities according to their degree of development and level of fruit load, varying this density from an initial distance of 1.5 x 2.0 meters to a maximum spacing of 3.0 x 2.0 meters. The fact that the plants are arranged at a dynamic density implies a spacing that allows for the greatest growth of the plants during their growth stages. This means that the distance between plants will increase over time. The initial density is 1.5m x 2.0m to reach a maximum spacing in productive stage of 3.0m x 2.0m being the 3.0m towards the alignment alley and the 2.0m over the planting strip or line.

In a preferred embodiment of the disclosure, the distribution of dynamic densities of the plants can be arranged with a row spacing scheme of 2.0m x 1.5m above the row to another with a distance of 2.0m between the row x 3.0m above the row.

Additionally, the LED light system is arranged in a high top grid above the plants and the flashing pulses of the LED lights have wavelengths ranging from 400 to 1500 nm, acting cyclically over time and within the space where the plants are located. The application of the flashing pulses is executed in cycles that vary from 15 minutes to 3 hours. This regulates the phenological cycle of the plants, i.e. the control of the alternation between vegetative growth and flowering. It involves synchronizing the flowering of the plant in a concentrated manner at the moment of optimal environmental conditions, in terms of temperature and relative humidity, for the development of the flower and fruit set.

This control is favored by artificial pollination, which is carried out by means of a manual and/or mechanical sprinkler applied directly on the trees at the time of flower opening.

In another aspect of the disclosure, tree size control is achieved by pruning each branch that has borne fruit for two years, where annually the productive wood that has been pruned is recycled and used as *mulch.*

In another important aspect of the present disclosure, pest control is performed in an environmentally friendly manner, where pest and disease control is performed on a daily basis by monitoring and manual control, and specifically by biological control of pests, which is carried out by means of beneficial microorganisms for plants that eliminate these pathogens, these microorganisms can be selected among *Trichoderma harzianum T-78, Glomus iranicum var. tenuihypharym, Beouverio bassiana,* and *Metarhizium anisopliae,* although pest control can also be carried out using fungal extracts, yeasts, or marine algae.

Finally, the fruit is harvested manually or mechanically. The plants can be cultivated both on flat land and on sloping land. The cultivation method of the present disclosure can be replicated on fruit trees with high water consumption such as: avocado trees, mandarin trees, citrus trees, apple trees, mango trees, pear trees, peach trees, kiwi trees, and others. Of special interest in Chilean agriculture is the cultivation of avocado trees (especially the Hass variety) and the cultivation of citrus (such as oranges and mandarins).

### EXAMPLES

The description of the rigorous tests to indicate the step-by-step method of growing fruit trees in containers, and the level of fruit production from the method, is demonstrated through the following comparative examples.

### Example 1: Methodology for growing avocado trees in containers under controlled conditions.

This example of disclosed methodology involved the use of Hass avocado trees, clonally propagated plants of high root density that do not have rootstock and are directly rooted. They have a root architecture comprising 5 main adventitious roots distributed in a spiral, which generate a mass of fine roots that develop in a cyclical and abundant manner in aerated containers (*airpot*) that are widely known in the technique.

The method involves the use of any container that allows the passage of air and that has sufficient strength to last at least 10 years without deteriorating its structural characteristics and permeability to water and air.

The method of cultivation in containers can use oxygen injection systems mechanically through the fertigating system. The availability of oxygen at the root level is essential for optimal plant development, since it is required for different priority metabolic processes such as: carbohydrate metabolism, nitrate reduction, symbiotic nitrogen fixation, protein renewal, and maintenance of the proton gradient and nutrient absorption by the roots, which, given the confinement situation in which these plants will find themselves, these factors are key for optimal plant development. For this purpose, we work with a substrate that provides the best oxygen/water ratio, as well as aerated containers and oxygenated nutrient solutions (oxyfertigating), that allow increasing the yield in these cultivation systems.

The substrate used was a mixture of inert substrate composed of coconut fiber and peat, in equal proportion of coconut fiber/peat. The pots were placed on mobile structures, under open air conditions, and fertigated with a nutrient solution comprising mainly phosphoric acid, ammonium nitrate, potassium nitrate, calcium nitrate and magnesium sulfate, which allow early vegetative development, flowering, and fruiting.

The plants are initially placed at a high density (1.5m x 1.5m spacing) and then worked at dynamic densities according to their degree of development and level of fruit load. The dynamic densities start with a distance between rows of 1.5m x 1.5m above the row to a distance of 2m between rows x 3m above the row.

To optimize their development, the plants are grown using a LED light system with flashing pulses of wavelengths that act cyclically over time and within the space where the plants are located. The LED light system is arranged in a high top grid above the plants and the flashing pulses have wavelengths ranging from 400 nm to 1500 nm, which act cyclically over time and within the space where the plants are located. The application of lights is achieved due to a mobile structure and the fact that the trees are in a very high density which allows covering a large amount of trees in significantly smaller spaces than in traditional planting. The application cycles of LED light pulses are adjusted depending on the objective and phenological age of the plant. Depending on the light range, application times vary from 15 minutes to 3 hours. This is achieved by controlling the phenological cycle of the plant, synchronizing flowering in a concentrated manner at the moment of optimum environmental conditions for fruit development.

The phenological cycle of the plant is controlled by synchronizing the flowering of the plant in a concentrated manner through the use of hormones, nutrients, the use of LED lights, and pruning. Such synchronization should be done at the time of optimal environmental conditions, in terms of temperature and relative humidity, to achieve fruit development and harvest in certain time windows during the year. Those time windows are determined by the environmental conditions of the place where the trees are located. The time from flowering to fruiting should take a range of approximately 1500 to 2000 degree days per year in 10° base.

To achieve an effective pollination of flowers, an artificial pollination system is used that significantly increases the fruit set per panicle, creating larger caliber fruit from a smaller seed size. Artificial pollination is carried out by means of a manual and/or mechanical sprinkler applied directly on the trees at the time of the flower's opening, which depends on the daily environmental conditions of the site. The sprinkler increases the number of flowers that can set and increases the productive potential of the tree, and avoids direct dependence on bee hives whose flight activity depends on the ambient temperature.

To control the size of the tree and maximize production, a training and pruning system is used that generates a multi-axis plant architecture, where productive wood is recycled annually, and each branch is pruned every 2 years before continuing production.

For pest and disease control, biological control and microorganisms are used to keep pathogen levels under control to a level that does not require the use of pesticides or insecticides. Biological control is carried out by means of microorganisms of the type *Trichoderma harzianum T-78, Glomus iranicum var. tenuihypharym, Beouverio bassiana* and *Metarhizium anisopliae.* Other methods known in the art involve using fungal extracts, yeasts, or seaweeds.

Given the high efficiency use of plant resources, water, nutrition, and light, and the non-use of agrochemicals that are harmful to the environment, avocado production is achieved with low environmental impact and high nutritional value.

### Example 2: Comparison of avocado growing methodology under plateau and soil conditions.

For this comparative test, plantings of Hass avocados grown on flat land were considered. Due to the type of land found in Chile, and the fact that most of the country has an extensive mountain range, it is not easy to find many hectares of flat land available for the cultivation of fruit trees, in addition, in recent years it has been determined that, in order to protect the tree from adverse weather conditions, planting on north-facing slopes is preferred.

For this reason, in many avocado plantations that have been grown for many years in Chile, the platations were carried out on flat land, as the benefit of operating plantations on slopes of the hills, where the land is lowered to form cultivation plateaus, was previously unknown..

For this field test, avocado trees in containers, according to the present disclosure, which were grown on flat land, were used and compared with avocado trees grown under typical soil conditions on flat land in order to compare production yields

Results: The studies indicated that cultivation in aerated containers allows an improvement in the phytosanitary status of the trees, significantly larger fruit size (positive commercial incidence), greater vegetative growth of the tree allowing earlier entry into production than normal, and lower water requirements.

Another improvement obtained was the use of water, since, as the plants are arranged in containers and just enough water is used to hydrate the roots of the plant inside the container, however, in soil crops, much more water is lost and absorbed by the surrounding soil and not necessarily by the roots of the tree. By quantifying the liters of water used for each cultivation methodology, it was possible to determine that there was a reduction of at least 50% of irrigation water used when growing avocado trees in containers according to the present disclosure. This is highly relevant given the world water shortage and the problems in many regions of Chile where it is assumed that avocado trees consume more water than that intended for human use, as previously indicated.

Finally, the last parameter evaluated was production yield, since production yield was evaluated since it is one thing if the avocado trees manage to grow to an adequate size, withstand the climatic conditions, and reach the adult stage, but all this is of little use if the fruit yield is not the same as in soil-grown avocados.

The results showed that the level of flowering improved significantly in the avocado trees grown in containers according to the present disclosure, as compared to the avocado trees grown in soil, the fruit production levels in both cases were the same, however, having a greater number of trees per hectare results in greater densification, greater use of the productive surface, and a significant reduction in water consumption per tree (greater than 50%). All of the above would indicate that with the cultivation and pollination method of the present disclosure, it is possible to improve the efficiency in the use of water (WUE), and it is available an environmentally sustainable method by reducing the use of nutrition or phytosanitary agrochemicals, all with a positive impact on crop yields per hectare.

The yields per plant obtained in avocado trees grown in soil according to the methods of the technique and those grown according to the methods of the present disclosure were the same, these being: in the first year of production, the yield was 4 kg per plant; second year was 10 kg/plant; third year was 15 kg/plant; fourth year was 18 kg/plant; and fifth year was 20 kg/plant.

Consequently, the method of the present disclosure proves to be: i) a sustainable cultivation strategy, which requires less water; ii) environmentally friendly, since it does not require pesticides; iii) more economical, since it saves water costs, pesticide use, handling, and maintenance; and iv) profitable, since it achieves the same level of fruit production per tree, but increases the yield per productive area.

Therefore, the above examples and description of the disclosure support the method of growing high water-consuming fruit trees in containers for intensive fruit production. Therefore, the scope of the described disclosure should not be limited only to the components mentioned in the examples such as avocado, since other designs and conformations of the disclosure can be given from the description herein detailed, as indicated in previous paragraphs, other high water consumption fruit trees which are of economic interest in the agricultural field and are also affected by water scarcity include citrus trees, where this method can be applied to fruit trees other than avocado trees.

## Claims

1. Method of growing avocado trees in containers for intensive fruit production, **CHARACTERIZED by** the fact that it comprises the following stages:
- arrange avocado plants of high root density in aerated containers;
- place the containers on mobile structures, under open air conditions;
- arrange in the containers a substrate for accelerated root growth;
- fertigate the containers with a nutrient solution that provides early vegetative development, flowering and fruiting of the plant;
- arrange the containers in conditions of dynamic density, which varies from a density of 1.0 x 1.5 meters to a density of 3.5 x 2.5 meters;
- control the phenological cycle of the plant by means of lighting with a LED light system with flashing pulses of wavelengths that act cyclically over time and within the space where the plants are located;
- artificially pollinate the flowers by applying pollen through a sprinkling system to each flower panicle;
- control tree size by training and pruning to form a multi-axis plant architecture;
- control pests and diseases by biological control with microorganisms; and
- grow the fruit of large caliber and with a small seed size.

2. The method of growing avocado in containers according to claim 1, CHARACTERIZED high root density avocado plants in aerated containers are clonally propagated with a root architecture comprising five adventitious roots.

3. The method of growing avocado in containers according to claim 2, **CHARACTERIZED in that** in the root architecture, the adventitious roots are spirally distributed, generating a mass of fine roots that develop in a cyclic manner.

4. The method of growing avocado trees in containers according to claim 1, **CHARACTERIZED in that** the aerated containers contain an inert substrate mixture of coconut fiber and peat that confers a lot of aeration.

5. The method of growing avocado trees in containers according to claim 1, **CHARACTERIZED in that** fertigation of the containers with a nutrient solution is carried out at a frequency and amount specific to each growth stage.

6. The method of growing avocado trees in containers according to claim 5, **CHARACTERIZED in that** the nutrient solution comprises mainly phosphoric acid, ammonium nitrate, potassium nitrate, calcium nitrate and magnesium sulfate.

7. The method of growing avocado trees in containers according to claim 1, **CHARACTERIZED in that** after the initial high density distribution, the plants are distributed in dynamic densities according to their degree of development and level of fruit load, said density varying from 1.5 x 2.0 meters to a density of 3.0 x 2.0 meters.

8. The method of growing avocado trees in containers according to claim 7, **CHARACTERIZED in that** in the distribution of dynamic densities of the plants these can be arranged with a scheme of distance between rows of 1m x 1.5m above the row to another with a distance of 2m between the row x 3m above the row.

9. The method of growing avocado trees in containers according to claim 1, **CHARACTERIZED in that** the LED light system is arranged in a high upper grid above the plants and the flashing pulses have wavelengths varying between 400 and 1500 nm, act cyclically over time and within the plant location space.

10. The method of growing avocado trees in containers according to claim 1, **CHARACTERIZED in that** the LED light system is applied in cycles ranging from 15 minutes to 3 hours.

11. The method of growing avocado trees in containers according to claim 1, **CHARACTERIZED in that** the control of the phenological cycle of the plant comprises synchronizing the flowering of the plant in a concentrated manner at the moment of optimum environmental conditions, in terms of temperature and relative humidity, for the development of the fruit.

12. The method of growing avocado trees in containers according to claim 1, **CHARACTERIZED in that** the artificial pollination is carried out by means of a manual and/or mechanical sprinkler applied directly on the trees at the time of flower opening.

13. The method of growing avocado trees in containers according to claim 1, **CHARACTERIZED in that** control of tree size is achieved by pruning each branch that has borne fruit for two years.

14. The method of growing avocado trees in containers according to claim 13, **CHARACTERIZED in that** annually the productive wood that has been pruned is recycled and used as *mulch.*

15. The method of growing avocado trees in containers according to claim 1, **CHARACTERIZED in that** pest and disease control is performed on a daily basis by monitoring and manual control.

16. The method of growing avocado trees in containers according to claim 1, **CHARACTERIZED in that** the biological control is carried out by means of microorganisms of the type *Trichoderma harzianum T-78* and *Glomus iranicum var. tenuihypharym., Beauveric bassiana* and *Metarhizium anisopliae,* also with extracts of fungi, yeasts or marine algae.

17. The method of growing avocado trees in containers according to claim 1, **CHARACTERIZED in that** the cultivation of the fruit is carried out manually or mechanically.

18. The method of growing avocado trees in containers according to claim 19, **CHARACTERIZED in that** the avocado plants are of the Hass variety.
